# EUROPEAN PATENT APPLICATION

(11) **EP 3 088 216 A1**
(43) Date of publication of application: **02.11.2016**
(21) Application number: 16166863.7
(22) Date of filing: 25.04.2016
(51) Int. Cl.: B60C 19/08, B60C 1/00, C08G 18/76, C08K 5/00, C08G 18/08, C08K 5/11, C08G 18/42, C08K 3/38, B60C 7/00

(54) **TIRE CONTAINING A CAST POLYURETHANE COMPONENT**

(30) Priority: 30.04.2015 US 201514700941
(71) Applicant: The Goodyear Tire & Rubber Company, Akron, Ohio 44316 (US)
(72) Inventor: VELAMAKANNI, Aruna Mani, Copley, OH Ohio 44321 (US); LAME, Anthony Ryan, Stow, OH Ohio 44242 (US)
(74) Representative: Kutsch, Bernd

(57) **Abstract**

A tire is disclosed having a path of thermal conductivity within a cast polyurethane component of the tire which extends from an internal portion of the tire to the tire's outer sidewall surface. The cast polyurethane component contains a dispersion of boron nitride particles. Preferably, the cast polyurethane is a reaction product of a liquid polyurethane reaction mixture comprising an organic polyisocyanate and polymeric polyol, or a primary aliphatic polyamine, desirably a diamine, and isocyanate terminated pre-polymer of an organic polyisocyanate and polymeric polyol, wherein said polymeric polyol is a saturated hydrocarbon polyol comprising at least one of polyester polyol and polyether polyol, and wherein the cast polyurethane does not contain carbon-to-carbon unsaturation. The boron nitride particles are preferably layered hexagonally crystalline boron nitride (h-BN) particles.

## Description

### Field of the Invention

This invention relates to the provision of heat conductivity for a tire containing a polyurethane component with a dispersion of boron nitride particles, preferably layered hexagonally crystalline boron nitride (h-BN) particles. The invention particularly relates to a pneumatic rubber tire with a polyurethane component wherein a path of thermal conductivity is provided from the interior of the tire to an exterior surface of the tire for dissipation of the conducted heat to the atmosphere. The polyurethane is preferably the product of a castable liquid polyurethane reaction mixture without containing carbon-to-carbon double bonds as distinguished from millable, sulfur curable, polyurethanes. It may sometimes be referred to as being a cast polyurethane.

### Background of the Invention

Various vehicular tires have been proposed which are composed of, or contain a component composed of, polyurethane. The polyurethane is typically the reaction product of an organic polyisocyanate and polymeric polyol, or reaction product of polyamine and isocyanate terminated pre-polymer of polyisocyanate and polymeric polyol.

The polyurethane is a cast polyurethane in a sense of being the product of casting a liquid polyurethane reaction mixture into a suitable mold cavity and allowing the liquid reaction mixture to react within the mold and form the molded polyurethane product without being sulfur or peroxide cured. The cast polyurethane for this invention does not contain an unsaturated hydrocarbon component and therefore is not susceptible to sulfur vulcanization.

The cast polyurethane for this invention is intended to be distinguished from and exclusive of a millable polyurethane comprising a product of a polyurethane reaction mixture containing unsaturated hydrocarbon component(s) which is sulfur or peroxide cured.

When the cast polyurethane is a reaction product of polyamine and isocyanate terminated pre-polymer which might more appropriately be referred to as a polyureaurethane, it is referred herein in more general terms as being a polyurethane.

Exemplary of various tires composed of or containing polyurethane components are, for example, shown in US-A-4,095,637 relating to a solid polyurethane tire/wheel assembly and US-A-4,295,513, US-A-4,131,667 and US-B-8,662,122 in general.

In practice, tires are generally subject to dynamic flexing during their service and operation. The dynamic flexing creates internally generated heat within the tire. Such internally generated heat promotes a temperature increase within the tire and thereby may promote a temperature increase for a polyurethane component of the tire. Therefore, it is desired to provide a path of thermal conductivity through a cast polyurethane component to eventually dissipate heat from the tire itself.

It is desired to evaluate a method of providing thermal conductivity, for example a thermal conductivity path, via a cast polyurethane component of the tire. For such method, it is desired to provide the polyurethane component with an internal dispersion of a boron nitride, preferably in a form of a composite of hexagonal boron nitride platelets, or h-BN, for providing the thermal conductivity for the cast polyurethane component.

Boron nitride is a chemical compound with a chemical formula represented as BN which consists of equal numbers of boron and nitrogen atoms which exists in various crystalline forms. The hexagonal form (which may sometimes be referred to herein as h-BN) is a layered boron nitride configuration which is composed of hexagonal crystalline stacked layers and is considered to be a stable form which exhibits good thermal and chemical stability. It is sometimes used as an additive in various lubricant and cosmetic products. It has been used in rubber compositions for various purposes. As indicated, it is desired to evaluate use of a dispersion of particulate h-BN within a cast polyurethane tire component for thermally conducting internally generated heat through the polyurethane component of a tire.

Optionally, the method may include a desiccant such as dry molecular sieves blended with one or more of the boron nitride or h-BN, polymeric polyol and polyamine to promote removal of moisture or to prevent moisture interference with the polyurethane reaction mixture for creation of the thermally conductive cast polyurethane component of the tire.

### Summary and Practice of the Invention

The invention relates to a tire in accordance with claim 1 and to a method in accordance with claim 10.

Dependent claims refer to preferred embodiments of the invention.

In accordance with a preferred aspect of this invention, a tire is provided with a path of thermal conductivity within a cast polyurethane component of the tire which extends from an internal portion of the tire to the tire's outer sidewall surface, wherein said cast polyurethane component contains a dispersion of layered hexagonally crystalline boron nitride (h-BN) particles, wherein said cast polyurethane is a reaction product of a liquid polyurethane reaction mixture comprising (A) an organic polyisocyanate and polymeric polyol, or (B) a primary aliphatic polyamine, desirably a diamine, and isocyanate terminated pre-polymer of an organic polyisocyanate and polymeric polyol, wherein said polymeric polyol is a saturated hydrocarbon polyol comprising at least one of polyester polyol and polyether polyol, desirably a polyester polyol, and wherein the cast polyurethane does not contain carbon-to-carbon double unsaturation (e.g. does not contain carbon-to-carbon double bonds).

By requiring the polyol to be a saturated hydrocarbon polyol, it is intended that the polyurethane does not contain carbon-to-carbon double bonds through which the polyurethane can be sulfur vulcanized.

In further accordance with a preferred aspect of this invention, a method of providing a tire with a non-vulcanized polyurethane component with a thermal conductive path through the polyurethane component is disclosed which comprises providing said polyurethane component with a dispersion throughout the polyurethane comprised of layered hexagonally crystalline boron nitride (h-BN) particles, wherein said polyurethane is prepared by: (A) blending said h-BN particles with a saturated hydrocarbon polymeric polyol to form a first composite thereof; (B) forming a reaction mixture by: (1) blending said first composite with an organic polyisocyanate to form a first reaction mixture, or (2) reacting said first composite with an organic polyisocyanate to form an isocyanate terminated pre-polymer thereof, followed by blending a primary aliphatic polyamine, desirably a diamine, therewith to form a second reaction mixture; (C) casting said first or second reaction mixture into a suitable mold and allowing the reaction mixture to react within the mold to form a polyurethane component containing the h-BN dispersion; (D) building a pneumatic rubber tire containing said polyurethane component with an outer atmospherically exposed surface to thereby provide a thermally conductive path from an internal portion of the tire through the polyurethane component from which the internally generated heat is dissipated into the atmosphere; wherein said polymeric polyol is a saturated hydrocarbon polyol comprised of at least one of polyester polyol and polyether polyol, desirably a polyester polyol.

By requiring the polyol to be a saturated hydrocarbon polyol, it is intended that the polyurethane is not sulfur vulcanized or sulfur crosslinked through a carbon-to-carbon double bond contained in the polyurethane.

In further accordance with a preferred aspect of this invention, a tire is provided, particularly a tire prepared by such method, which contains a non-vulcanized and non-crosslinked polyurethane containing a dispersion of said boron nitride (preferably h-BN) wherein said polyurethane component includes an outside surface of the tire to enable a path of heat conductivity to extend from an internal portion of the tire through the polyurethane component to an external atmospherically exposed surface of the tire to thereby dissipate the heat into the atmosphere.

In practice, the aforesaid primary aliphatic diamine for said tire and for said method may comprise 4,4'-methylene dianiline.

In one embodiment, said polyurethane contains a particulate molecular sieve desiccant.

In one embodiment, for said tire and said method, from 0.1 to 5, alternately from 1 to 5, parts by weight of the boron nitride or h-BN is provided as a dispersion within the polyurethane product.

In one embodiment, the aforesaid polyurethane and said method includes providing a plasticizer with said polymeric polyol to promote processing the polymeric polyol. Such plasticizer may be, for example, an aliphatic adipate containing from 8 to 20 carbon atoms, such as for example, dioctyl adipate.

In one embodiment, the aforesaid polyurethane and said method includes providing a desiccant (e.g. molecular sieves) with said polymeric polyol and/or diamine to promote moisture removal therefrom.

In additional accordance with a preferred aspect of this invention, a pneumatic rubber tire is provided as being prepared by said method and containing a polyurethane component containing an internal dispersion of the h-BN, wherein the polyurethane component provides a heat conductive path from an internal portion of the tire to its outer atmospherically exposed surface.

In one embodiment, the polymeric polyol has a hydroxyl functionality of from 2 to 3.

In one embodiment, the polymeric polyester polyol may be a product of dicarboxylic acid having from 4 to 10 carbon atoms and hydroxyl terminated saturated hydrocarbon diol having from 2 to 8 carbon atoms which may be, for example, a condensation product of glycols and organic polycarboxylic acid or anhydride.

Representative low molecular weight polyols for the preparation of the polyester polyols are, for example, glycols such as ethylene glycol, propylene glycol, butylene glycol, pentylene glycol, decamethylene glycol, etc. Representative examples of the organic dicarboxylic acids may be, for example, succinic acid, glutaric acid, adipic acid, phthalic acid, terephthalic acid, isophthalic acid, suberic acid, sebacic acid, pimelic acid, and azelaic acid. The anhydrides of such acids might be used in place of the acid if desired and appropriate. If desired, from one to 20 percent by weight of a triol or higher polyfunctional polyol or polyfunctional acid can be present to promote branching in the polyurethane polymer itself if desired and appropriate.

In one embodiment, the polymeric saturated hydrocarbon polyether polyol may be a product of at least one of saturated alkylene oxides and alkylene glycols. Such polyether polyols might be prepared, for example, by polymerizing or copolymerizing saturated alkylene oxides such as ethylene oxide, propylene oxide, and butylene oxides, by polymerizing or copolymerizing the low molecular weight glycols, or by the reaction of one or more such alkylene oxides with the glycols or with triol, or optionally with a polycarboxylic acid such as phthalic acid. The saturated hydrocarbon polyether polyols include polyalkylene-aryl ether glycols or triols, polytetramethylene ether glycols, polyalkylene ether-thioether glycols or triols and alkyd resins. Generally the polytetramethylene ether glycols are preferred polyether glycols.

Representative of various diamines for reaction with said pre-polymer of isocyanate terminated saturated hydrocarbon polymeric polyol is, for example, 4,4'-methylene dianiline as previously mentioned.

The polyurethane reaction mixtures are generally applied as liquid mixtures so that, where appropriate, the polymeric polyol may be pre-heated to create a liquid mixture.

In one embodiment, the saturated hydrocarbon polymeric polyols may have a molecular weight, for example, of from 1,200 to 1,400 Daltons.

In one embodiment, the organic polyisocyanates include various organic diisocyanates and mixtures thereof. The organic polyisocyanates may be aromatic, aliphatic or cycloaliphatic or combinations of these types, depending upon the type resultant polyurethane desired.

Representative examples of such polyisocyanates may be, for example, the toluene diisocyanates (TDI), m-phenylene diisocyanate, 4-chloro-1,3-phenylene diisocyanate, 4,4'-tetramethylene diisocyanate (MDI), 1,6-hexamethylene diisocyanate, 1,10-decamethylene diisocyanate, 1,4-cyclohexylene diisocyanate, 4,4'-methylene-bis(cyclohexylisocyanate) and 1,5-tetrahydronaphthalene diisocyanate, and mixtures of such diisocyanates as may be desired or appropriate.

The MDI is understood to exist in three isomers, namely 2,2-MDI, 2,4-MDI and 4,4-MDI and is understood to be generally provided commercially as at least 98 percent 4,4-MDI with a small 2,4-MDI content which may sometimes be referred to as "pure MDI".

The TDI is generally commercially provided as a mixture of 2,4- and 2,6-isomers in a form of an 80:20 blend thereof, also in a form of a 63:35 blend or 95:5 blend of the two isomers.

The toluene diisocyanates (TDI), diphenylmethane-4,4'-diisocyanate (MDI), 3,3'-dimethyl-4,4'-bis phenylene diisocyanate (TODI) and 4,4'-methylene bis(cyclohexyl isocyanate) (H₁₂MDI) are generally desired where appropriate, with the TDI and MDI being more generally desirable.

Various nonreactive solvents known to those skilled in the polyurethane art can be used for the preparation of the polyurethane reaction mixtures, if a solvent is desired and appropriate. Representative of the solvents are, for example, aromatic solvents such as benzene, xylene and toluene, and the liquid lower ketones such as acetone, methyl ethyl ketone, methyl isobutyl ketone, and diisobutyl ketone. If the polyurethane reaction mixtures are to be used to prepare the cured polyurethanes in confined areas which are subject to explosive hazards, nonflammable chlorinated solvents can be used to form nonflammable polyurethane reaction mixtures.

The practice of this invention is further illustrated by reference to the following examples which are intended to be representative rather than restrictive of the scope of the invention. Unless otherwise indicated, the parts and percentages are by weight of the polyurethane.

### EXAMPLE I

Polyurethane reaction mixtures are prepared to evaluate an inclusion of a dispersion of particulate h-BN in a polyurethane from a polyurethane reaction mixture comprising polymeric saturated hydrocarbon polyester polyol and polyisocyanate.

For the h-BN containing polyurethane, the polymeric polyester polyol was blended with the h-BN, dry molecular sieve desiccant (to promote moisture removal) and dioctyladipate plasticizer (to reduce viscosity of the blend). The resulting blend was degassed under vacuum to remove any residual moisture. The polyisocyanate is separately degassed under vacuum.

The blend was then blended with the polyisocyanate (MDI) to form a polyurethane reaction mixture which was cast into a suitable mold and the polyurethane reaction mixture allowed to react to form a molded (shaped) h-BN reinforced polyurethane sample.

For this evaluation, a control sample of polyurethane reaction mixture was prepared comprised of reacting a liquid reaction mixture without the h-BN comprised of polymeric saturated hydrocarbon polyester polyol (together with molecular sieve desiccant) and polyisocyanate and to form a polyurethane product.

Experimental rubber Samples B through F were prepared with the polymeric polyol and polyisocyanate of control rubber Sample A (together with the molecular sieves desiccant) together with from 2 to 5 parts of the particulate h-BN having been added to the polymeric polyol. The h-BN was blended with the polymeric polyol together with the desiccant of molecular sieves prior to adding the polyisocyanate to form the polyurethane reaction mixture.

The components of the polyurethane reaction mixture are reported in the following Table 1 in terms of parts by weight per 100 parts by weight of the polyurethane (polymeric polyol and diisocyanate), (php), unless otherwise indicated.

**Table 1**

| Parts by weight per 100 parts of Polyurethane* | | | | | | |
|---|---|---|---|---|---|---|
| Control | Experimental | | | | | |
| Material | A | B | C | D | E | F |
| Polyurethane¹ | 100 | 100 | 100 | 100 | 100 | 100 |
| Molecular sieves² | 0.33 | 0.33 | 0.33 | 0.33 | 0.33 | 0.33 |
| Dioctyladapate³ | 0 | 0 | 0 | 0 | 0 | 5.8 |
| Boron nitride,hexagonal(h-BN)⁴ | 0 | 1.3 | 1.9 | 2.6 | 3.2 | 1.3 |

| | | | | | | |
|---|---|---|---|---|---|---|
| *parts by weight per 100 parts by weight of combination of polymeric polyol plus diisocyanate ¹Product of 63.69 parts of polymeric saturated hydrocarbon polyester polyol and 36.31 parts of diisocyanate. The polymeric saturated hydrocarbon polyester polyol was a viscous liquid as Elastocast™ 72580R from BASF. The diisocyanate was MDI as Lupranate™ 5030 from BASF. ²Dried molecular sieves, a white powder, from the Alfa Aesar Company ³Plastizer from Sigma Aldrich ⁴White fluffy powder from Momentive | | | | | | |

The following Table 2 illustrates physical properties of the polyurethanes of the Control Sample A and Experimental Samples B through F based upon the basic formulation of Table 1.

**Table 2**

| Control | Experimental | | | | | |
|---|---|---|---|---|---|---|
| Properties | A | B | C | D | E | F |
| Shore A Hardness (23°C) | 70 | 72 | 73 | 74 | 74 | 70 |
| Modulus (300%), MPa | 6 | 5.8 | 6.8 | 5.7 | 6 | 5 |
| Tensile strength, MPa | 14 | 23 | 26 | 25 | 24 | 20 |
| Elongation, at break (%) | 463 | 477 | 592 | 644 | 609 | 625 |
| Grosch abrasion rate¹, (high severity test, gm/km) | 315 | 305 | 325 | 347 | 348 | 320 |
| Tear strength², (N/mm) | 58 | 60 | 61 | 63 | 63 | 56 |

| | | | | | | |
|---|---|---|---|---|---|---|
| ¹The Grosch abrasion rate, reported in terms of mg/km, can be run on a LAT-100 Abrader and is measured in terms of mg/km of polyurethaner abraded away. The test polyurethane sample is placed at a slip angle under constant load (Newtons) as it traverses a given distance on a rotating abrasive disk (disk from HB Schleifmittel GmbH). In practice, a low abrasion severity test may be run, for example, at a load of 20 Newtons, 2° slip angle, disk speed of 40 km/hr for a distance of 7,500 meters; a medium abrasion severity test may be run, for example, at a load of 40 Newtons, 6° slip angle, disk speed of 20 km/hr and distance of 1,000 meters; a high abrasion severity test may be run, for example, at a load of 70 Newtons, 12° slip angle, disk speed of 20 km/hr and distance of 250 meters; and an ultra-high abrasion severity test may be run, for example, at a load of 70 Newtons, 16° slip angle, disk speed of 20 km/hr and distance of 500 meters. ²Data obtained according to a tear strength (peal adhesion), or tear resistance test as ASTM test D624 | | | | | | |

From Table 2 it can be seen that the tensile strength property of the polyurethanes of Experimental Samples G through E progressively beneficially increased by the progressive increase of the addition of the h-BN as compared to the polyurethane of Control Sample A without the h-BN addition.

For the polyurethane of Experimental Sample F, the tensile strength also significantly increased over the tensile strength of the Control Sample A, although to a lesser extent than the tensile strength of Experimental Samples B through E, apparently because of the significant addition of the dioctyladipate plasticizer.

While the beneficial increase of tensile strengths of the polyurethanes may not be completely understood, it is envisioned that the nitrogen atoms of the h-BN can undergo a hydrogen bonding with hydrogen atoms contained on the polyurethane to thereby promote a beneficial reinforcement of the polyurethanes.

### EXAMPLE II

Additional polyurethane reaction mixtures are prepared to evaluate an inclusion of a dispersion of particulate h-BN in a polyurethane reaction mixture comprised of primary diamine (sodium chloride salt thereof and therefore a chemically blocked diamine) and pre-polymer comprised of polyisocyanate terminated polymeric saturated hydrocarbon polyester polyol.

The polymeric polyester polyol containing the h-BN (without molecular sieve desiccant) was degassed under vacuum to remove any residual trapped air and the reaction mixture cast into a suitable mold and allowed to react (upon being initially heated to unblock the primary amine reactant) to form a molded (shaped) polyurethane product containing a dispersion of h-BN reinforcement.

For this evaluation, a Control Sample was prepared comprising reacting a liquid reaction mixture comprised of primary diamine and isocyanate terminated pre-polymer of polyisocyanate and polymeric saturated hydrocarbon polyester polyol without h-BN to form a polyurethane product.

Experimental rubber Samples A through H were prepared comprised of the primary diamine and pre-polymer of the Control Sample but with added h-BN in amounts ranging from 2 to 5 parts by weight of the particulate h-BN. The h-BN was blended with the primary diamine.

The polyurethane is referred to as being "hot cast" in a sense of heating to activate the primary diamine reactant.

The components of the polyurethane reaction mixture are reported in the following Table 3 in terms of weight percent of the polyurethane of the polyurethane containing product unless otherwise indicated.

**Table 3 - Hot Cast Polyester Urea System Reaction Mixture**

| (Parts by weight per 100 parts Polyurethane)* | | | | | | | | | |
|---|---|---|---|---|---|---|---|---|---|
| Material | Control | A | B | C | D | E | F | G | H |
| Polyurethane⁶ | 100 | 100 | 100 | 100 | 100 | 100 | 100 | 100 | 100 |
| Dioctyladipate⁷ | 0 | 4.1 | 4.1 | 4.1 | 4.1 | 4.1 | 4.1 | 4.1 | 4.1 |
| Boron nitride, hexagonal(h-BN)⁸ | 0 | 0 | 0.23 | 0.45 | 0.68 | 0.9 | 1.1 | 1.4 | 4.5 |

| | | | | | | | | | |
|---|---|---|---|---|---|---|---|---|---|
| *polyurethane component as diamine reacted with isocyanate terminated polyol ⁶100 parts by weight polyurethane (polyureaurethane) as a product of 90.22 parts by weight isocyanate terminated saturated hydrocarbon polyester polyol and 9.78 parts by weight primary diamine. The isocyanate terminated polymeric polyester polyol is provided as Duracast S700™, a viscous liquid product from Chemtura Corporation. The primary diamine curative is provided as Duracure C₃LF™ from Chemtura Corporation. ⁷Plasticizer from Sigma Aldrich ⁸White fluffy powder obtained from Momentive | | | | | | | | | |

The following Table 4 illustrates physical properties of the polyurethanes of the Control Sample and Experimental Samples A through H based upon the basic formulation of Table 3.

**Table 4- Hot Cast Polyester Urea System Properties**

| Polyester Urea Property | Control | A | B | C | D | E | F | G | H |
|---|---|---|---|---|---|---|---|---|---|
| Shore A hardness (23°C) | 72 | 70 | 71 | 71 | 71 | 67 | 68 | 70 | 72 |
| Modulus (300%), MPa | 4.4 | 4.1 | 4.1 | 4.2 | 4.1 | 4 | 4.4 | 4.4 | 4.2 |
| Tensile strength, (MPa) | 14.2 | 15.7 | 15.2 | 17.2 | 18.2 | 16.2 | 13.8 | 18.4 | 19 |
| Elongation at break (%) | 922 | 995 | 955 | 903 | 998 | 899 | 785 | 834 | 964 |
| Grosch abrasion rate (high | | | | | | | | | |
| severity test) (mg/km) | 928 | 354 | 362 | 384 | 381 | 353 | 471 | 416 | 453 |
| Tear strength, N/mm | 59 | 60 | 58 | 56 | 56 | 53 | 55 | 55 | 55 |
| Thermal conductivity (W/m-K)⁹ | 0.20 | 0.21 | - | - | - | 0.21 | - | - | 0.25 |
| Percent increase in conductivity | 4 | - | - | - | - | 5 | - | - | 21 |

| | | | | | | | | | |
|---|---|---|---|---|---|---|---|---|---|
| ¹⁰Thermal conductivity as Watts/meter-Kelvin | | | | | | | | | |

The percent increase in heat conductivity referred to in Table 4 is thermal conductivity of the each of the Samples A, E and H compared to the Control Sample without the boron nitride.

From Table 4 it can be seen that that the thermal conductivity, (W/m-K), of the polyurethane beneficially increased by simply providing a minor inclusion of a dispersion of the boron nitride (h-BN) in the polyurethane. By increasing the concentration of the h-BN in the polyurethane, a corresponding increase in thermal conductivity was observed.

A significant benefit of the increased thermal conductivity is to enable providing a path of thermal heat conductivity for polyurethane component of a rubber tire to conduct internally generated heat during operational service of the tire from an internal portion of the tire to an outside surface of the tire to dissipate the internally generated heat to the atmosphere.

It is considered that such internally conducted heat transmission from the internal portion of the tire to be dissipated into the atmosphere beneficially promotes an increase in durability of the tire by enabling the tire, particularly its polyurethane component, to run cooler.

## Claims

1. A tire having a path of thermal conductivity within a cast polyurethane component of the tire which extends from an internal portion of the tire to the tire's outer sidewall surface, wherein said cast polyurethane component contains a dispersion of boron nitride particles.

2. The tire of claim 1 wherein the cast polyurethane is a reaction product of a liquid polyurethane reaction mixture comprising:
(A) an organic polyisocyanate and polymeric polyol, or
(B) a primary aliphatic polyamine, desirably a diamine, and isocyanate terminated pre-polymer of an organic polyisocyanate and polymeric polyol,
wherein said polymeric polyol is a saturated hydrocarbon polyol comprising at least one of polyester polyol and polyether polyol, and
wherein the cast polyurethane does not contain carbon-to-carbon unsaturation.

3. The tire of claim 1 or 2 wherein the boron nitride particles are layered hexagonally crystalline boron nitride (h-BN) particles.

4. The tire of at least one of the previous claims wherein the boron nitride particles, preferably the layered hexagonally crystalline boron nitride (h-BN) particles, are present in an amount of from 0.1 to 5 weight percent, alternatively from 1 to 3.5 weight percent, of the polyurethane.

5. The tire of at least one of the previous claims wherein said cast polyurethane component includes an outside surface of the tire to enable a path of heat conductivity to extend from an internal portion of the tire through the polyurethane component to an external atmospherically exposed surface of the tire.

6. The tire of at least one of the previous claims wherein the cast polyurethane contains a desiccant and/or wherein the polyurethane component contains a plasticizer, preferably a plasticizer comprising dioctyladipate.

7. The tire of at least one of the previous claims wherein the polymeric polyol has a hydroxyl functionality of from 2 to 3.

8. The tire of at least one of the previous claims wherein the polymeric polyol is a polyester polyol as a product of dicarboxylic acid having from 4 toabout 10 carbon atoms and hydroxyl terminated saturated hydrocarbon diol having from 2 to 8 carbon atoms; and/or wherein the polymeric saturated hydrocarbon polyether polyol is a product of at least one of saturated alkylene oxides and alkylene glycols.

9. The tire of at least one of the previous claims wherein said organic polyisocyanates comprise aromatic, aliphatic or cycloaliphatic or combinations of these types; and/or wherein the polyisocyanate comprises at least one of toluene diisocyanate (TDI), m-phenylene diisocyanate, 4-chloro-1,3-phenylene diisocyanate, 4,4'-tetramethylene diisocyanate (MDI), 1,6-hexamethylene diisocyanate, 1,10-decamethylene diisocyanate, 1,4-cyclohexylene diisocyanate, 4,4'-methylene-bis(cyclohexylisocyanate) and 1,5-tetrahydronaphthalene diisocyanate, and mixtures of such diisocyanates.

10. A method of providing a tire with a non-vulcanized, non-crosslinked, polyurethane component with a heat conductive path through the polyurethane component which comprises providing said polyurethane component with an internal dispersion throughout the polyurethane comprising boron nitride particles, preferably layered hexagonally crystalline boron nitride (h-BN) particles, wherein said polyurethane is prepared by:
(A) blending said boron nitride particles with a saturated hydrocarbon polymeric polyol to form a first composite thereof;
(B) forming a reaction mixture by:
(1) blending said first composite with an organic polyisocyanate to form a first reaction mixture, or
(2) reacting said first composite with an organic polyisocyanate to form an isocyanate terminated pre-polymer thereof, followed by blending a primary aliphatic polyamine, preferably a diamine, therewith to form a second reaction mixture;
(C) casting said first or second reaction mixture into a suitable mold and allowing the reaction mixture to react within the mold to form a polyurethane component containing the boron nitride dispersion;
(D) building a pneumatic rubber tire containing said polyurethane component having an outer atmospherically exposed surface to thereby provide a heat conductive path from an internal portion of the tire through the polyurethane component from which the internally generated heat is dissipated into the atmosphere.

11. The method of claim 10 wherein said polymeric polyol is a saturated hydrocarbon polyol comprising at least one of polyester polyol and polyether polyol, wherein the boron nitride dispersion, preferanly the h-BN dispersion, is present in an amount of from 0.1 to 5 weight percent of the polyurethane, and wherein said polyurethane component includes an outside surface of the tire to enable a path of heat conductivity to extend from an internal portion of the tire through the polyurethane component to an external atmospherically exposed surface of the tire to thereby dissipate the heat into the atmosphere.

12. The method of claim 10 or 11 wherein a desiccant is blended with said polymeric polyol and/or diamine to promote moisture removal therefrom; and/or wherein a plasticizer is blended with said polyurethane.

13. The method of at least one of the claims 10 to 12 wherein the polymeric polyester polyol is a product of dicarboxylic acid having from 4 to 10 carbon atoms and hydroxyl terminated saturated hydrocarbon diol having from 2 to 8 carbon atoms, which is preferably a condensation product of glycols and organic polycarboxylic acid or anhydride.

14. The method of at least one of the claims 10 to 13 wherein the polymeric saturated hydrocarbon polyether polyol is a product of at least one of saturated alkylene oxides and alkylene glycols.

15. The method of at least one of the claims 10 to 14 wherein the diamine for reaction with said pre-polymer of isocyanate terminated saturated hydrocarbon polymeric polyol is 4,4'-methylene dianiline.
